# EUROPEAN PATENT APPLICATION

(11) **EP 1 622 216 A1**
(43) Date of publication of application: **01.02.2006**
(21) Application number: 05013013.7
(22) Date of filing: 16.06.2005
(51) Int. Cl.: H01M 4/04, H01M 8/02

(54) **Titanium material and method for manufacturing the same**

(30) Priority: 30.06.2004 JP 2004192473; 09.12.2004 JP 2004357157
(71) Applicant: KABUSHIKI KAISHA KOBE SEIKO SHO, Kobe-shi, Hyogo 651-8585 (JP)
(72) Inventor: Yashiki, Takashi, Chou-ku Osaka-shi Osaka 541-0051 (JP); Sakashita, Shinji, 1-Chom Nishi-ku Kobe-Shi, Hyogo 651-2271 (JP); Fukuda, Masahito, Shinagawa-ku Tokyo 141-8688 (JP)
(74) Representative: Müller-Boré & Partner Patentanwälte

(57) **Abstract**

A titanium material of the present invention includes a base material composed of a titanium alloy containing at least one alloying element selected from the group consisting of gold, silver, and platinum group elements; and a concentrated layer integrally disposed as a layer on the surface of the base material. In the concentrated layer, the alloying elements are concentrated by elution of Ti from the surface of the base material. The average thickness of the concentrated layer is 2.5 nm or more. The total alloying element concentration in the concentrated layer is 40 to 100 atomic percent. The total content of the alloying element in the base material is 0.01 to 1.0 percent by mass. Electrodes composed of the titanium material of the present invention are suitable for use in separators of fuel cells, and can readily be produced, so that the cost can be reduced.

## Description

The present invention relates to a titanium material and a method for manufacturing the same. In particular, the present invention relates to a titanium material suitable for use in electrodes of, for example, separators of fuel cells, as well as a method for manufacturing the same.

Titanium and alloys thereof have excellent corrosion resistance, and titanium itself has excellent electrical conductivity. Therefore, these are promising materials for electrodes, e.g., electrodes for electrolytic industry and separators of solid polymer type fuel cells, which are required to have the electrical conductivity and the corrosion resistance.

However, since pure titanium and alloys thereof are active metals, oxide films referred to as passive films are formed on the material surfaces when the materials are simply left standing. The passive film increases the electrical resistance, and by extension causes a current loss. Therefore, in many cases, the titanium materials are not suitable as electrode materials without being processed.

Consequently, Japanese Unexamined Patent Application Publication No. 2003-105523 discloses a titanium electrode material, in which a passive film is removed from the surface of a titanium material, and the resulting surface is coated with a noble metal film made of a platinum group noble metal and/or an oxide thereof by plating, screen printing, or the like, so that the electrical conductivity is ensured.

A solid polymer type fuel cell is constructed by stacking a plurality of unit cells with electrodes referred to as separators (or bipolar plates) therebetween, where the unit cell has a configuration in which a solid polymer electrolyte film is sandwiched between an anode and a cathode. This separator is required to have low contact resistance, and application of metallic materials, e.g., aluminum alloys, stainless steels, nickel alloys, and titanium alloys, have been researched. However, these metallic materials have problems in that rust forms or corrosion products are deposited on the surface in a use environment, and the contact resistance is increased with time, resulting in a reduction of the electrical conductivity and a current loss.

In order to prevent such an increase in contact resistance and to maintain the electrical conductivity, a technology in which an electrically conductive ceramic film is formed on a metal surface (hereafter referred to as known technology A) and a technology in which a noble metal thin film layer is formed on a metal surface, compression processing is performed and, thereafter, a corrosion protection treatment is performed in an active gas atmosphere (hereafter referred to as known technology B) have been proposed (Japanese Unexamined Patent Application Publication No. 11-162479 and Japanese Unexamined Patent Application Publication No. 2003-105523).

However, the above-described coating treatment of the noble metal film results in further increase in cost in addition to the use of an expensive titanium material as a raw material and, therefore, has not become practically widespread in preparation of the electrode materials due to a high production cost.

In particular, the separators of the fuel cell are constructed by sandwiching cells (unit cells) between a plurality of separators, where the unit cell has a configuration in which a polymer electrolyte film is held between a porous fuel electrode and an air electrode. Since a large number of separators are used, requirements for cost reduction have become intensified. Under the present circumstances, stainless steels provided with the electrical conductivity are primarily used as the raw materials of separators from the viewpoint of the cost although the corrosion resistance is not always satisfactory.

According to the above-described known technologies A and B, the durability of the separator can be ensured to a certain extent. However, the maintenance of the electrical conductivity is still unsatisfactory. This will be described below in detail.

In the known technology A (in which the electrically conductive ceramic film is formed on the metal surface), since the ceramic is brittle, a crack tends to occur in the ceramic film due to some type of impact or the like. When a crack occurs in the ceramic film, corrosive materials enter through the crack, and the base material (metal) is corroded. Consequently, there are problems in that peeling of the ceramic film occurs, and by extension the contact resistance is increased, so as to decrease the electrical conductivity.

In the known technology B (in which the noble metal thin film layer is formed on the metal surface, compression processing is performed and, thereafter, the corrosion protection treatment is performed in the active gas atmosphere), there are problems in that local peeling of the noble metal thin film layer occurs, so as to decrease the electrical conductivity. That is, since the separator is usually provided with asperities, it is difficult to perform uniform compression processing of the noble metal thin film layer in the compression processing after the noble metal thin film layer is formed, and it cannot be avoided that the residual stress of the noble metal thin film layer varies depending on locations. Consequently, local peeling of the noble metal thin film layer occurs, and by extension the contact resistance is increased, so as to decrease the electrical conductivity.

The present invention was made in consideration of the above-described problems. Accordingly, it is an object of the present invention to overcome the above-described problems and to provide a titanium material suitable for use in electrodes and a method for manufacturing the same. That is, the present invention is directed to provide a titanium material, wherein the production is readily performed, the cost can be reduced, and a decrease in electrical conductivity due to an increase in contact resistance is hard to occur.

It is known that a titanium alloy containing platinum group elements and the like as alloying elements has the corrosion resistance higher than that of pure titanium. However, the inventors of the present invention found out that even when the content of the above-described alloying element was small, the above-described alloying elements were concentrated by eluting Ti from the titanium alloy and, therefore, electrically conductive concentrated layer was continuously formed on the surface of the base material of the titanium alloy. Consequently, the present invention has been completed.

A titanium material according to an aspect of the present invention includes a base material composed of a titanium alloy containing 0.01 to 1.0 percent by mass, in total, of at least one alloying element selected from the group consisting of gold, silver, and platinum group elements (Pd, Pt, Ir, Ru, Rh, and Os); and a concentrated layer integrally disposed as a layer on the surface of the above-described base material, wherein the average thickness of the above-described concentrated layer is 2.5 nm or more, and the total concentration of the above-described alloying elements in the concentrated layer is 40 to 100 atomic percent.

The thickness of the above-described concentrated layer refers to the depth of an alloying element concentrated layer up to the point at which the concentration of the alloying elements is decreased to one-half the peak concentration, where the concentration of the alloying elements in the base material is taken as the reference and a composition analysis is performed by the Auger electron spectroscopy (AES) along the depth (thickness) direction of the base material. Preferably, the average thickness of the above-described concentrated layer is 6.0 nm or more.

Preferably, the total content of the above-described alloying elements in the above-described base material is 0.01 to 1.0 percent by mass. When a method in which the concentrated layer is formed by eluting Ti from the surface of the base material is used, if the content is less than 0.01 percent by mass, the quantity of elution of Ti is increased, and the formation of the concentrated layer takes much time. On the other hand, even when the content exceeds 1.0 percent by mass, the formation of the concentrated layer is not accelerated considering that the material cost is increased. Therefore, this is not economical.

The titanium material according to an aspect of the present invention may be configured to include an oxide film having a thickness of 10 to 40 nm between the above-described concentrated layer and the above-described base material. The above-described oxide film may contain titanium oxide having an anatase type crystal structure.

An electrode and a separator of a fuel cell, each composed of the titanium material according to the above-described aspect of the present invention, are also within the scope of the present invention.

A method for manufacturing the above-described titanium material according to an another aspect of the present invention includes the step of immersing a base material composed of a titanium alloy containing 0.01 to 1.0 percent by mass, in total, of at least one alloying element selected from the group consisting of gold, silver, and platinum group elements (Pd, Pt, Ir, Ru, Rh, and Os) in a solution containing a non-oxidizing acid to elute titanium from the surface of the above-described base material, so that the concentrated layer having a total concentration of the above-described elements of 40 to 100 atomic percent and an average thickness of 2.5 nm or more is formed on the surface of the titanium alloy.

In the above-described method for manufacturing the titanium material according to the present invention, the above-described solution used for the immersion of the base material may contain an oxidizing acid in addition to the non-oxidizing acid. Here, the above-described oxidizing acid may contain 0.1 to 40 percent by mass of nitric acid.

In the above-described method for manufacturing the titanium material according to the present invention, the above-described solution used for the immersion of the titanium alloy may contain at least one selected from the group consisting of 0.01 to 3.0 percent by mass of hydrogen fluoride, 1.0 to 30 percent by mass of hydrochloric acid, 1.0 to 30 percent by mass of sulfuric acid, 10 to 50 percent by mass of phosphoric acid, 10 to 40 percent by mass of formic acid, and 10 to 30 percent by mass of oxalic acid as the non-oxidizing acid.

The above-described method for manufacturing the titanium material according to the present invention may further include the step of heating at a temperature of 350°C to 600°C after the titanium alloy is immersed in the above-described solution.

The above-described titanium material has excellent corrosion resistance and electrical conductivity in combination and, therefore, is suitable for use in a separator of a fuel cell. A method for using the titanium material according to another aspect of the present invention includes the step of using the above-described titanium material as a raw material for titanium alloy prepared through dissolution without removing the concentrated layer of the titanium material. The concentrated layer of the above-described titanium material is originally formed from alloying elements constituting the titanium alloy serving as the base material and, therefore, the scrap thereof has excellent recycling efficiency.

The titanium material produced by the method of the present invention is provided with the concentrated layer which has a predetermined thickness and in which alloying elements are concentrated by eluting Ti from the surface of the base material made of the titanium alloy containing alloying elements, e.g., platinum group elements. Therefore, the titanium material can have corrosion resistance exhibited by the titanium alloy and excellent electrical conductivity exhibited by the concentrated layer in combination. The titanium material of the present invention can be produced by using a titanium alloy containing a small content of alloying elements through a relatively simple technique of eluting Ti. Consequently, the production cost can also be reduced. According to the manufacturing method of the present invention, a titanium material resistant to occurrence of decrease in electrical conductivity due to an increase in contact resistance can be produced. Therefore, the titanium material of the present invention is suitable for use in electrode materials, for example, electrodes for electrolytic treatments and separators of fuel cells.
Fig. 1 is a graph showing the relationship between the average thickness of a concentrated layer and the contact resistance.
Fig. 2 is a schematic diagram showing a concentration profile in the depth direction of Ti and noble metals measured by the Auger electron spectroscopy (AES).

A titanium material according to an embodiment of the present invention will be described.

This titanium material includes a base material composed of a titanium alloy containing 0.01 to 1.0 percent by mass, in total, of at least one alloying element selected from the group consisting of platinum group elements (Pd, Pt, Ir, Ru, Rh, and Os), gold, silver, and the remainder including Ti and incidental impurities and a concentrated layer integrally disposed as a layer on the surface of the base material. The above-described concentrated layer is formed by eluting Ti from the surface of the base material so as to concentrate the above-described alloying elements, and oxides of the alloying element are contained partially. The oxides of the platinum group elements have electrical conductivity similar to that of the platinum group element single substrates. The oxides of the platinum group elements are partially eluted into a Ti-corrosive solution described below. However, it is believed that the oxide is redeposited on the surface of the base material since the solubility of the oxide is low.

The above-described alloying elements are concentrated on the surface of the base material so as to form the concentrated layer as a result of selective corrosion and elution of Ti. Therefore, even when the content of the alloying element in the titanium alloy constituting the base material is very small, as the quantity of elution of Ti is increased, a concentrated layer effective for decreasing the contact resistance is formed in due time. On the other hand, when the content of the alloying elements is increased, the quantity of elution of Ti can be decreased. However, since the alloying elements are very expensive, an increase in material cost results contrarily. Consequently, in consideration of the cost of Ti to be eluted and the elution time required to form an effective concentrated layer, preferably, the content of the alloying elements is about 0.01 to 1.0 percent by mass, more preferably is about 0.05 to 0.5 percent by mass, and further preferably is about 0.05 to 0.3 percent by mass. In addition to the above-described alloying elements, about 0.2 percent by mass or less of Cr, about 1.0 percent by mass or less of Ni, about 0.5 percent by mass or less of Co, and about 0.5 percent by mass or less of Mo may be added as auxiliary elements to further improve the corrosion resistance and the strength.

Among general-purpose titanium alloys, examples of titanium alloys (the quantities of alloying element are in percent by mass) suitable for use in the present invention may include Ti-0.15Pd (JIS Class 11, Class 12, Class 13), Ti-0.4Ni-0.015Pd-0.025Ru-0.14Cr (JIS Class 14, Class 15), Ti-0.05Pd (JIS Class 17, Class 18), Ti-0.05Pd-0.3Co (JIS Class 19, Class 20), Ti-0.05Ru-0.5Ni (JIS Class 21, Class 22, Class 23), and Ti-0.1Ru (ASTM Grade 26, Grade 27).

In the case where the above-described concentrated layer is formed by eluting Ti serving as a matrix, as in the present invention, a surface film in which alloying element is concentrated is formed as a layer on the surface of the base material. Consequently, the thickness of the concentrated layer is defined as the thickness of the alloying element concentrated layer up to the depth at which the concentration of the alloying elements is decreased to one-half the peak concentration where the concentration of the alloying elements in the base material is taken as the reference and a composition analysis is performed by the Auger electron spectroscopy (AES) along the depth direction of the base material. If the average thickness of the concentrated layer is less than 2.5 nm, a region in which no concentrated layer is formed due to segregation of components and the like is increased on the surface of the base material, a passive film of Ti is formed in that region, and the electrical conductivity is decreased as a whole. Therefore, it is desirable that the average thickness of the concentrated layer is 2.5 nm or more, preferably is 6.0 nm or more, and more preferably is 12.5 nm or more.

It was made clear that when the total concentration of noble metal elements in this concentrated layer was 40 to 100 atomic percent, the initial contact resistance was low, excellent corrosion resistance and high durability were exhibited, and thereby, the contact resistance was hard to increase and the electrical conductivity was hard to decrease over an extended time period.

The reason the total concentration of noble metal elements in the noble metal element concentrated layer is specified to be 40 to 100 atomic percent is that if the concentration is less than 40 atomic percent, the initial contact resistance is increased, the contact resistance is increased with a lapse of operating time, and as a result, the electrical conductivity is decreased to an unsatisfactory level. The concentration of noble metal elements in the noble metal element concentrated layer is the ratio of the quantity of noble metal elements (total quantity) to the sum of the quantity of Ti and the quantity of noble metal elements (total quantity) in the noble metal element concentrated layer. That is, when the quantity of Ti in the noble metal element concentrated layer is assumed as A and the quantity of noble metal elements (total quantity) is assumed as B, the concentration of noble metal elements (atomic percent) in the noble metal element concentrated layer is represented by 100 x B/(A + B). In the case where two types of noble metal element are contained and the quantities thereof are assumed as B1 and B2, respectively, the equation, B = B1 + B2 holds true, and the concentration of noble metal elements (atomic percent) in the noble metal element concentrated layer is represented by 100 x (B1 + B2)/(A + B1 + B2). In the case where three types of noble metal element are contained and the quantities thereof are assumed as B1, B2, and B3, respectively, the equation, B = B1 + B2 + B3 holds true, and the concentration of noble metal elements (atomic percent) in the noble metal element concentrated layer is represented by 100 x (B1 + B2 + B3)/(A + B1 + B2 + B3).

According to the method for manufacturing the titanium material wherein the concentrated layer is formed by eluting Ti from the surface of the base material, the noble metal element concentrated layer having a total concentration of noble metal elements of 40 to 100 atomic percent can be formed on the surface of the titanium alloy and, in addition to this, an oxide film can be formed between this noble metal element concentrated layer and the titanium alloy. Therefore, the titanium material produced by this method for manufacturing the titanium material includes the noble metal element concentrated layer having a total concentration of noble metal elements of 40 to 100 atomic percent on the surface of the titanium alloy and, in addition, the titanium material can be provided with the oxide film between this concentrated layer and the titanium alloy. Although the mechanism of formation of the above-described oxide film is not clear, it is believed that the noble metal element concentrated layer contributes to the mechanism.

When the thickness of the above-described oxide film formed between the noble metal element concentrated layer and the titanium alloy is 10 nm or more, the corrosion resistance can be improved. However, if the thickness of this oxide film exceeds 40 nm, the contact resistance is increased to an unsatisfactory level. From the above-described viewpoint, it is desirable that the thickness of this oxide film is specified to be 10 to 40 nm. This will be described below in detail.

Since the above-described noble metal element concentrated layer is formed by selective dissolution of Ti, fine holes may be included. Therefore, corrosive materials, e.g., chloride ions, enter into the holes in a use environment, and the titanium alloy of the base material may be corroded. When the titanium alloy of the base material is corroded, cubical expansion occurs due to corrosion products. Consequently, the above-described concentrated layer may be peeled, and the contact resistance may be increased due to the electrical resistance of the corrosion product itself, so that the electrical conductivity is decreased.

At this time, the oxide film disposed between the above-described noble metal element concentrated layer and the titanium alloy of the base material performs the function of preventing the corrosion of the titanium alloy of the base material since this oxide film serves as a diffusion barrier to corrosive materials in the environment. If this oxide film is thin, the anticorrosive effect is inadequate and the corrosive materials readily enter by diffusion. In consideration of the environment for use as a separator, it is desirable that the thickness of this oxide film is 10 nm or more, and further desirably is 15 nm or more. It is desirable from the viewpoint of anticorrosion that the thickness of this oxide film becomes larger. However, if the oxide film becomes too thick, the contact resistance is increased due to the electrical resistance thereof, so that the electrical conductivity is decreased. From this point of view, it is desirable that the thickness of this oxide film is 40 nm or less, and furthermore, 30 nm or less is recommended.

It is desirable that the oxide film disposed between the above-described noble metal element concentrated layer and the titanium alloy contains titanium oxide having an anatase type crystal structure. The reason is that the titanium oxide having an anatase type crystal structure exhibits an electrical conductivity at a high level and, therefore, the electrical conductivity is hard to decrease due to an increase in contact resistance. In order to particularly reduce the decrease in electrical conductivity due to the oxide film, desirably, the content of the above-described titanium oxide having an anatase type crystal structure is specified to be 50 percent by mass or more. It can be certified by electron diffraction or the like that the anatase type crystal structure is contained, as well as the content thereof.

A corrosion treatment in which the above-described base material made of the titanium alloy is immersed and kept in a corrosive solution is convenient to form the concentrated layer on the surface of the base material by eluting Ti from the surface. The type of the above-described corrosive solution is not specifically limited as long as the solution corrodes Ti, and nitric and hydrofluoric acid, hydrofluoric acid, hydrochloric acid, sulfuric acid, and the like may be used. Among them, nitric and hydrofluoric acid, hydrofluoric acid, high-temperature high-concentration hydrochloric acid and sulfuric acid, or a mixed solution thereof exhibits high corrosiveness to Ti and is suitable for achieving the surface concentration of the alloying elements in a short time.

The concentrated layer formed by eluting Ti from the surface of the base material through the above-described corrosion treatment is not removed by peeling or abrasion due to light rubbing of the surface, since a surface coating of concentrated alloying element is continuously formed on the surface of the base material. Consequently, the titanium material of the present invention is suitable for electrode materials, e.g., electrode materials for electrolysis treatments and separators for fuel cells, which are used or statically held in the environment of an electrolytic solution. After the concentrated layer is formed, the adhesion of the concentrated layer may be improved by means of, for example, performing a heating treatment in air or in a vacuum.

A manufacturing method of the present invention will be described below in further detail.

When a titanium alloy containing at least one of platinum group elements (Pd, Pt, Ir, Ru, Rh, and Os), Au, and Ag (hereafter may be referred to as noble metal elements) is immersed in a solution containing a non-oxidizing acid, Ti is selectively dissolved, so that a layer having a high noble metal element concentration (hereafter may be referred to as a noble metal element concentrated layer) can be formed on the surface of the titanium alloy. It was made clear that the concentration of noble metal elements in this concentrated layer was able to be varied by, for example, immersion conditions, e.g., the acid concentration and temperature of the solution, in which the titanium alloy was immersed, and immersion time, and a high concentration was able to be achieved, for example, a high concentration of 100 atomic percent was able to be achieved.

The present invention was made based on the above-described findings. The method for manufacturing the titanium material according to the present invention is characterized by including the step of immersing a titanium alloy containing at least one element (noble metal element) selected from the group consisting of platinum group elements (Pd, Pt, Ir, Ru, Rh, and Os), Au, and Ag in a solution containing a non-oxidizing acid, so that a layer (noble metal element concentrated layer) having a total concentration of the above-described elements (noble metal elements) of 40 to 100 atomic percent is formed on the surface of this titanium alloy.

When the above-described titanium alloy is immersed in the solution containing the non-oxidizing acid, a trace quantity of noble metal element is dissolved into the solution. In the case where this solution contains an oxidizing acid in addition to the non-oxidizing acid, a trace quantity of the noble metal element dissolved in the solution is redeposited. Consequently, the concentration of the noble metal elements on the surface is accelerated and, thereby, a concentrated layer having an adequately high noble metal element concentration is readily formed.

The oxidizing acid refers to an acid having a property of forming an oxide film on the surface of a titanium material or a stainless steel when the metal is immersed in a solution containing the acid. The non-oxidizing acid refers to an acid having no property of forming an oxide film on the surface of a titanium material or a stainless steel when the metal is immersed in a solution containing the acid.

The solution containing the non-oxidizing acid may be a solution in which a non-oxidizing acid is added to a solvent, e.g., water, followed by mixing, or a solution in which a salt (for example, ferric chloride) to become a non-oxidizing acid by being dissolved into a solvent, e.g., water, is added to a solvent, e.g., water, and is dissolved. Each of these solutions can be used as a solution containing a non-oxidizing acid. The solution containing the oxidizing acid may be a solution in which an oxidizing acid is added to a solvent, e.g., water, followed by mixing, or a solution in which a salt to become an oxidizing acid by being dissolved into a solvent, e.g., water, is added to a solvent, e.g., water, and is dissolved. Each of these solutions can be used as a solution containing an oxidizing acid. The solution is not limited to the aqueous solution, and may be a non-aqueous solution in which an acid is dissolved into an organic solvent and the like.

In the case where the above-described solution used for the immersion of the titanium alloy contains 0.1 to 40 percent by mass of nitric acid as the oxidizing acid, the above-described redeposition of the noble metal elements occurs more reliably, and the concentration of the noble metal elements on the surface can be further accelerated. If the concentration of the nitric acid is less than 0.1 percent by mass, the above-described effect of accelerating the surface concentration tends to be reduced. If the concentration exceeds 40 percent by mass, passivation of Ti occurs so that the selective dissolution of Ti becomes hard to occur, and by extension the formation of satisfactory noble metal element concentrated layer tends to become difficult. Consequently, it is desirable that the concentration of the nitric acid is 0.1 to 40 percent by mass (hereafter may be referred to as concentration a), and 1 to 30 percent by mass is more desirable. It is further desirable that the concentration of the nitric acid is 1 to 20 percent by mass in consideration of the adhesion of the noble metal element concentrated layer as well.

In the case where the above-described solution used for the immersion of the titanium alloy contains 0.01 to 3.0 percent by mass of hydrogen fluoride (HF), 1.0 to 30 percent by mass of hydrochloric acid (HCl), 1.0 to 30 percent by mass of sulfuric acid (H₂SO₄), 10 to 50 percent by mass of phosphoric acid (H₃PO₃), 10 to 40 percent by mass of formic acid (HCOOH), or 10 to 30 percent by mass of oxalic acid [(COOH)₂] as the non-oxidizing acid (hereafter these concentrations may be collectively referred to as concentration b), a concentrated layer having an adequately high noble metal element concentration can be more reliably formed. If the concentrations of these acids are lower than the respective minimum values of the range, for example, if the concentration of hydrochloric acid is less than 1.0 percent by mass, the selective dissolution speed of Ti is significantly decreased, and it becomes difficult to form a concentrated layer having an adequately high noble metal element concentration within a practical range of treatment time. On the other hand, if the concentrations of these acids are higher than the respective maximum values of the range, for example, if the concentration of hydrochloric acid exceeds 30 percent by mass, since the selective dissolution speed of Ti is significantly increased, even when a noble metal element concentrated layer is once formed, the layer is instantaneously fallen off, and as a result, it is difficult to produce an effective concentrated layer. Even when a noble metal element concentrated layer is produced, the adhesion tends to become poor. Consequently, it is desirable that the concentration of the non-oxidizing acid is within the above-described range, for example, the concentration of hydrochloric acid is specified to be 1.0 to 30 percent by mass. Furthermore, it is more desirable that hydrogen fluoride is 0.05 to 2.0 percent by mass, hydrochloric acid is 2.0 to 25 percent by mass, sulfuric acid is 2.0 to 25 percent by mass, phosphoric acid is 15 to 45 percent by mass, formic acid is 15 to 35 percent by mass, and oxalic acid is 15 to 25 percent by mass. More preferably, hydrogen fluoride is specified to be 0.1 to 1.0 percent by mass. At least two types of these acids may be used in combination. In the case where at least two types are used in combination, it is essential only that the concentration of each of them is set at a concentration which does not cause fall off of the noble metal element concentrated layer once formed because of excessive increase in the selective dissolution speed of Ti.

In the treatment in which the titanium alloy is immersed in the solution, if the treatment temperature (the temperature of the solution) is too low, the formation of the noble metal element concentrated layer takes much time since the reaction speed is low. If the treatment temperature is too high, the dissolution reaction proceeds heterogeneously and, thereby, portions in which the noble metal elements are not adequately concentrated tend to result. From this point of view, it is desirable that the treatment temperature is set at 10° C to 80° C, and furthermore, 15°C to 60°C is recommended.

If the treatment time is too short, the formation of satisfactory noble metal element concentrated layer becomes difficult, and the durability and the stability are reduced. If the treatment time is increased to some extent, a stable surface layer in which the noble metal elements are concentrated is formed, and the reaction becomes hard to proceed, so that the effect is saturated. It is recommended that the treatment time is about 1 to 60 minutes although the treatment time is somewhat varied depending on the composition of the solution used for the immersion of the titanium alloy and the treatment temperature.

If the content of noble metal element in the titanium alloy of the base material is less than 0.01 percent by mass, it becomes difficult to adequately increase the concentration of noble metal elements in the concentrated layer formed by immersion in the solution, and the contact resistance may be increased due to growth of the surface oxide film depending on a use environment. When the content of noble metal element in the titanium alloy of the base material is specified to be 0.01 percent by mass or more, the concentration of noble metal elements in the concentrated layer can readily be increased adequately. However, if the content exceeds 1.0 percent by mass, this effect is saturated. From this point of view, it is recommended that the total content of noble metal elements in the titanium alloy of the base material is specified to be 0.01 to 1.0 percent by mass.

If necessary, it is possible to add elements, e.g., O, H, N, Fe, and C, in addition to the noble metal elements to the titanium alloy of the base material in order to adjust the mechanical properties, e.g., a tensile strength. The surface state of the titanium alloy of the base material is not specifically limited, and the state of a common pickled material, a bright annealed material, a polish finished material, and the like may be adopted.

The adhesion between the noble metal element concentrated layer and the titanium alloy can be improved by heating at a temperature of 350°C to 600°C after the titanium alloy is immersed in the solution. If the temperature of this heating is lower than 350°C, the effect of improving the adhesion is reduced. If the temperature exceeds 600°C, the contact resistance is increased, since the oxide film of the titanium alloy of the base material grows significantly. If this heating is performed in an oxidizing atmosphere, the contact resistance tends to become increased, since the oxide film of the titanium alloy of the base material grows significantly. From this point of view, it is desirable that this heating is performed in a vacuum atmosphere, an inert gas (Ar, N₂, or the like) atmosphere, or a reducing atmosphere.

The titanium material produced by the method for manufacturing the titanium material according to the present invention is provided with the noble metal element concentrated layer having the total concentration of noble metal elements of 40 to 100 atomic percent on the surface of the titanium alloy. This titanium material has low initial contact resistance, excellent corrosion resistance, and high durability, wherein the contact resistance is hard to increase and the electrical conductivity is hard to decrease over an extended time period.

Therefore, the titanium material is suitable for use in electrodes required to have the above-described properties. In particular, the titanium material is suitable for use in separators of fuel cells and, thereby, the contact resistance is hard to increase and the electrical conductivity can be maintained over an extended time period, so that the durability thereof can be improved.

A titanium material in which a titanium alloy is plated with the noble metal element may have low initial contact resistance, excellent corrosion resistance, and high durability, and therefore, a decrease in electrical conductivity due to an increase in contact resistance may be hard to occur. However, this method is not simple, and is economically inefficient due to a high production cost as compared with that in the method for manufacturing the titanium material according to the present invention. That is, the method for manufacturing the titanium material according to the present invention is a simple method in which the titanium alloy is immersed in an acid-containing solution and no plating is performed and, therefore, is clearly simple and economically efficient due to a low production cost as compared with that in the method in which the plating is performed.

When the titanium material is used as scrap (raw material for titanium alloy prepared through dissolution) after the titanium alloy has been used as electrodes, in the case where the titanium material is a titanium alloy plated with the noble metal element, the noble metal element plating layer must be separated from the titanium alloy of the base material before the titanium material is reused as a raw material for titanium alloy prepared through dissolution. However, in the case where the titanium material is produced by the method for manufacturing the titanium material according to the present invention, the titanium material can be reused as the raw material for titanium alloy prepared through dissolution without removing the noble metal element concentrated layer. Consequently, the titanium material produced by the method for manufacturing the titanium material according to the present invention is simple, economically efficient due to a low cost, and has excellent recycling efficiency because of the above-described point as compared with the titanium material produced by plating the titanium alloy with the noble metal element.

The method for manufacturing the titanium material according to the present invention is not a method in which the titanium alloy containing the noble metal elements is simply pickled with an acid-containing solution for the purpose of, for example, removal of scale, but a method in which Ti is selectively dissolved from the titanium alloy containing the noble metal elements with the acid-containing solution to form the noble metal element concentrated layer having the concentration of noble metal elements of 40 to 100 atomic percent on the surface of the titanium alloy. If the pickling for the purpose of, for example, removal of scale is applied without being modified, it is difficult to form the above-described noble metal element concentrated layer with excellent adhesion.

The present invention will be more specifically described below with reference to examples. However, the present invention is not interpreted in a limited way in accordance with the examples.

### Example 1

A test piece 30 mm wide by 30 mm long was taken from a titanium alloy cold-rolled sheet (sheet thickness 2 mm) having a composition shown in the following Table 1. The test piece was immersed in a corrosive solution, in which 1 percent by mass HF aqueous solution and 10 percent by mass HNO₃ aqueous solution were mixed, at 25°C for a time shown in Table 1, so that Ti was eluted from the surface of the base material of the test piece, and a beige or blackish brown concentrated layer, in which platinum group elements and oxides thereof are concentrated, was formed on the surface of the base material. Subsequently, the test piece was taken out of the corrosive solution, and was washed with water, followed by drying. Thereafter, the thickness and the contact resistance of the concentrated layer were measured in the following manner. The results thereof are collectively shown in Table 1.

The thickness of the concentrated layer was measured with an analyzer PHI-670 (produced by PHI). The composition analysis of the test piece (titanium alloy sheet) was performed in the thickness direction by AES on the following measurement conditions. The content of the alloying elements in the titanium alloy was taken as the reference, the depth at which the content of the alloying elements became one-half the peak height thereof was determined, and this depth was defined as the thickness of the concentrated layer. The measurements of the thicknesses were performed at three different points in a region other than portions having an appearance exhibiting specific surface property, and an average thereof was determined.

### Measurement conditions

Primary electron beam: 5 kV-50 nA
Measurement region: 10 µm × 10 µm square
Sputtering rate: 4.5 nm/min (in terms of SiO₂)

Both surfaces of the above-described test piece were sandwiched between measurement electrodes (contact surface size: 20 mm x 20 mm), a current I of 4 A was passed, a voltage E between the two electrodes was measured, and the contact resistance was calculated from E/I (I = 4 A). At this time, the contact surfaces of the measurement electrodes were plated with gold, and a load was applied to the measurement electrodes such that the test piece was sandwiched with a force of 1.0 kN.

Since the contact resistance of a practically usable electrode material is less than or equal to 30% of the contact resistance of a naturally generated passive film (7.5 mΩ of Sample No. 11, Known material), that is, 2.25 mΩ or less, this value was taken as the evaluation criterion of the contact resistance. As a matter of course, it is better to have a lower contact resistance. More preferably, the contact resistance is less than or equal to 20% of the naturally generated passive film, that is, 1.5 mΩ or less.

**Table 1**

| Sample No. | Base material composition (mass %) | Immersion time in corrosive solution (sec) | Average thickness of concentrated layer (nm) | Contact resistance (mΩ) | Remarks |
|---|---|---|---|---|---|
| 1 | Ti-0.15Pd | 30 | 4.0 | 2.0 | Example |
| 2 | Ti-0.15Pd | 60 | 7.0 | 1.2 | Example |
| 3 | Ti-0.15Pd | 180 | 13.0 | 0.8 | Example |
| 4 | Ti-0.15Pd | 300 | 16.0 | 0.6 | Example |
| 5 | Ti-0.15Pd | 600 | 20.0 | 0.3 | Example |
| 6 | Ti-0.05Pd | 600 | 15.0 | 0.5 | Example |
| 7 | Ti-0.1Ru | 600 | 17.0 | 0.5 | Example |
| 8 | Ti-0.1Ir | 600 | 19.0 | 0.4 | Example |
| 9 | Ti-0.1 Pt | 600 | 18.0 | 0.5 | Example |
| 10 | Ti-0.4Ni-0.015Pd-0.025Ru-0.14Cr | 600 | 17.0 | 0.6 | Example |
| 11 | Ti-0.15Pd | - | (passive film : 8.0) | 7.5 | Known material |
| 12 | Ti-0.001 Pd | 600 | 0.5 | 7.2 | Comparative example |
| 13 | Ti-0.15Pd | 600 | (after peeling surface layer) 8.0 | 1.1 | Example |

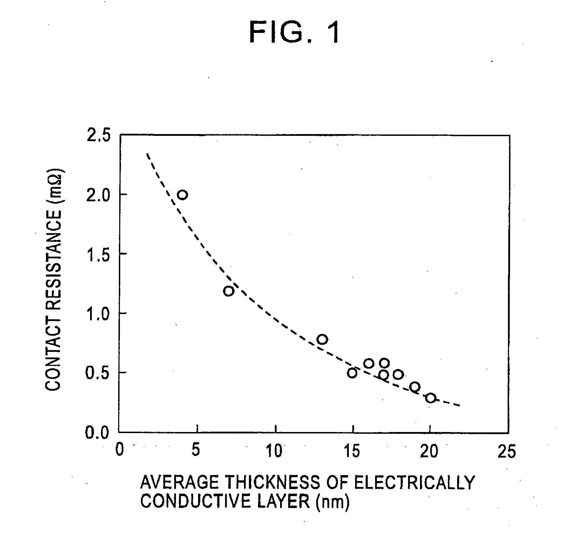

With respect to Sample Nos. 1 to 9 shown in Table 1, the relationship between the average thickness of a concentrated layer and the contact resistance was organized and is shown in Fig. 1. As is clear from Fig. 1, the contact resistance is sharply increased when the average thickness of the concentrated layer becomes less than 2.5 nm, and the contact resistance falls within the range of 2.25 mΩ or less when the average thickness is 2.5 nm or more, so that the electrical conductivity suitable for use as an electrode material is exhibited. It was ascertained that the contact resistance became 1.5 mΩ or less when the average thickness was 6.0 nm or more, and the contact resistance became 0.75 mΩ or less when the average thickness was 12.5 nm or more, so as to exhibit excellent electrical conductivity.

Sample No. 13 was prepared by forming a concentrated layer having an adequate thickness (average thickness 20.0 nm), pressing an adhesive tape against the sample surface, and forcedly peeling off the surface layer of the concentrated layer. As a result, the average thickness of the concentrated layer became 8.0 nm, and even in this case, the contact resistance was satisfactorily low value.

On the other hand, with respect to Sample No. 12 having a low alloying element content of 0.001 percent by mass, the quantity of eluted Ti was inadequate even when the immersion time was set at 600 seconds, a concentrated layer having an effective thickness was not formed, the titanium alloy was exposed at many portions, and the contact resistance was increased.

The composition of the titanium alloy constituting the base material of the above-described Sample No. 5 was accurately analyzed. As a result, Pd was 0.15%, O was 0.049%, Fe was 0.043%, N was 0.008%, C was 0.006%, H was 0.004%, and the remainder was Ti. The concentrated layer was formed and 20 test pieces, in total, of No. 5 were prepared, and were melted with a nonconsumable arc melting furnace without removing the concentrated layer. A button ingot was formed, and the composition analysis was performed. As a result, Pd was 0.13%, O was 0.055%, Fe was 0.044%, N was 0.008%, C was 0.007%, H was 0.007%, and the remainder was Ti. Consequently, it was ascertained that the electrode material of the present invention after being used was able to be satisfactorily reused as a raw material for titanium alloy prepared through dissolution without removing the concentrated layer.

### Example 2

A titanium alloy sheet with dimensions of 30 x 30 x 1 mm was dry-polished to the level of SiC#400, and was cleaned with acetone. Thereafter, the titanium alloy sheet was immersed in an aqueous solution containing acid. The titanium alloy sheet used at this time, the aqueous solution, the immersion treatment temperature (temperature of aqueous solution), and the immersion time are shown in Tables 2 to 4.

After the above-described immersion, the concentration of the noble metal elements in the surface layer (noble metal element concentrated layer) of the titanium alloy sheet was measured by the Auger electron spectroscopy (AES). At the same time, the thickness of the concentrated layer was determined as in the above-described Example 1. The contact resistance was measured in the following manner. That is, a gold sheet having a thickness of 0.1 mm was taken as the counterpart of the titanium alloy sheet, and the contact resistance was measured with a four-wire resistance meter while 2.5 N/mm² (contact surface: 20 mm x 20 mm) was applied by an oil hydraulic press. Furthermore, the adhesion between the noble metal element concentrated layer and the titanium alloy of the base material was evaluated with a cellophane adhesive tape in conformity with the tape testing method in JIS H8504.

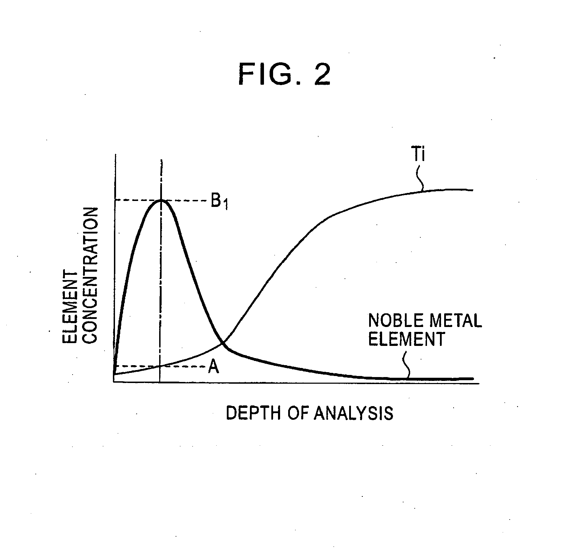

As described above, the noble metal element concentration in the noble metal element concentrated layer can be measured by the Auger electron spectroscopy (AES). As for the measurement conditions, it is recommended that the analysis region is on the order of 10 µm × 10 µm, and it is recommended that the sputtering rate is 1 to 10 nm/min (in terms of SiO₂). When the concentration of Ti and the noble metal element are measured along the depth direction by AES, the resulting concentration profile is as shown in Fig. 2. In general, with respect to the outermost surface of a metal, C (carbon) and the like is frequently observed since contaminants, e.g., oil, adhere thereto. Consequently, the concentrations of Ti and the noble metal elements at the outermost surface become relatively low and, thereby, in many cases, accurate analytical values are not attained. Therefore, in the concentration profile, the concentrations of Ti and the noble metal elements at the depth at which the noble metal element concentration reached its peak were read, and the ratio thereof, that is, 100 x B1/(A + B1) was defined as the noble metal element concentration in the concentrated layer. When the noble metal element concentration exhibited no peak, the ratio of the concentration of the noble metal elements at the outermost surface to the concentration of Ti was taken as the noble metal element concentration. Measurements were performed at arbitrary five portions in an analysis region of 5 mm x 5 mm, and an average value thereof was taken as the noble metal element concentration.

The titanium alloy sheet after the above-described immersion was subjected to a corrosion test. This corrosion test was an immersion test in a sulfuric acid aqueous solution of pH 2 at 80°C, and the immersion time was 3,000 hours.

The titanium alloy sheet after the above-described corrosion test was subjected to a measurement of the contact resistance. This measurement was performed in a manner similar to that in the above-described measurement of the contact resistance of the titanium alloy after the immersion. The durability was evaluated based on the thus measured contact resistances before and after the corrosion test.

The above-described measurement results of the noble metal element concentration of the surface layer of the titanium alloy sheet, the measurement results of the adhesion between the noble metal element concentrated layer and the titanium alloy, the measurement results of the contact resistance before the corrosion test, and the measurement results of the contact resistance after the corrosion test are shown in Tables 2 to 5.

In Example 2, the contact resistance is expressed in the unit mΩ·cm². This is a value where the area of the measurement of the contact resistance is 1 cm². In Example 1, since the contact resistance is measured while a load of 100 kg is applied to a contact area of 2 cm x 2 cm, the contact resistance of Example 1 indicates a value where the surface pressure is 25 kg/cm², and the contact area is 4 cm². On the other hand, in Example 2, although the measurement condition is the same, the comparison is made by using values where the unit is mΩ·cm² and the contact area is converted to 1 cm². That is, since the measured value is a value where the contact area is 4 cm², the measured value is divided by 4 and, thereby, is converted into a value where the contact area is 1 cm².

In Tables 2 to 5, with respect to the adhesion, a symbol x indicates very poor, a symbol Δ indicates poor (better than that indicated by the symbol x), a symbol ○ indicates good (satisfactory), a symbol **⊙** indicates very good (better than that indicated by the symbol ○). With respect to the contact resistance, the symbol x indicates that the contact resistance is 100 mΩ·cm² or more (very poor), the symbol Δ indicates that the contact resistance is less than 100 mΩ·cm² and 50 mΩ·cm² or more (poor), a symbol □ indicates that the contact resistance is less than 50 mΩ·cm² and 30 mΩ·cm² or more (fair), the symbol ○ indicates that the contact resistance is less than 30 mΩ·cm² and 20 mΩ·cm² or more (good: better than that indicated by the symbol □), the symbol ⊙ indicates that the contact resistance is less than 20 mΩ·cm² and 15 mΩ·cm² or more (very good: better than that indicated by the symbol ○), and the symbol **⊙⊙** indicates that the contact resistance is less than 15 mΩ·cm² (excellent: better than that indicated by the symbol ⊙).

In Table 2, No. 1 is concerned with Comparative example, wherein a titanium alloy sheet which had not been subjected to a immersion treatment in the aqueous solution was dry-polished to the level of SiC#400, and was cleaned with acetone. As is clear from Table 2, this titanium alloy sheet exhibits a high contact resistance of 50 mΩ·cm² or more (Δ) before the corrosion test, and the contact resistance is increased to 100 mΩ·cm² or more (x) by the corrosion test, so that there is a problem in using as a separator from the viewpoint of electrical resistance.

On the other hand, titanium materials of Nos. 2 to 35 shown in Tables 2 and 3 are produced by the method in Example of the present invention. Each of them exhibits a contact resistance of less than 50 mΩ·cm² (□, ○, ⊙, or ⊙⊙) before the corrosion test, and a contact resistance after the corrosion test is also less than 50 mΩ·cm² (□, ○, ⊙, or ⊙⊙), so that an excellent electrical resistance property is exhibited. This satisfies the electrical resistance property required for use as a separator. Furthermore, every titanium material produced by the method in Example of the present invention is provided with a surface layer having very good adhesion and, therefore, it is believed such a problem that a predetermined performance is not delivered due to peeling in the practical use does not occur.

Among titanium materials of Nos. 2 to 35, in the case where a titanium alloy containing the noble metal elements at a quantity of less than 0.01 percent by mass (total concentration) is used as the titanium alloy of the base material (No. 2, No. 3, No. 5, and the like), the contact resistances before and after the corrosion test are at the level of less than 50 mΩ·cm² and 30 mΩ·cm² or more (□) or less than 30 mΩ·cm² and 20 mΩ·cm² or more (○).

In the case where a titanium alloy containing the noble metal elements at a quantity of 0.01 percent by mass or more and 0.1 percent by mass or less (total concentration) is used (No. 12, No. 13, and No. 14), the contact resistance before the corrosion test is less than 15 mΩ·cm² (⊙⊙) or less than 20 mΩ·cm² and 15 mΩ·cm² or more (⊙) and, therefore, is excellent. However, the contact resistance after the corrosion test is at the level of less than 30 mΩ·cm² and 20 mΩ·cm² or more (○) or less than 20 mΩ·cm² and 15 mΩ·cm² or more (⊙) and, therefore, the contact resistance is slightly increased due to the corrosion test.

In the case where a titanium alloy containing the noble metal elements at a quantity of 0.1 percent by mass or more and 1.0 percent by mass or less (total concentration) is used (No. 4, No. 6, No. 7, and the like), the contact resistance before the corrosion test is less than 15 mΩ·cm² (⊙⊙) and, therefore, is excellent. In addition, the contact resistance after the corrosion test is also less than 15 mΩ·cm² (⊙⊙) and, therefore, an excellent contact resistance property is exhibited.

Table 4 shows the examination results on the effect exerted by the concentration of hydrogen fluoride and the concentration of nitric acid when an aqueous solution containing hydrogen fluoride and nitric acid was used as a solution in which a titanium alloy was immersed. As is clear from Table 4, when the concentration of nitric acid is 0 (when no nitric acid is contained) (No. 4-1), the concentration of the noble metal elements in the noble metal element concentrated layer satisfies a specified concentration (40 to 100 atomic percent) of the present invention. However, the contact resistance before the corrosion test is less than 50 mΩ·cm² and 30 mΩ·cm² or more (□), and the contact resistance after the corrosion test is less than 50 mΩ·cm² and 30 mΩ·cm² or more (□). When the concentration of nitric acid is less than 0.1 percent by mass (No. 4-2), although the concentration of the noble metal elements in the noble metal element concentrated layer is higher than that in the above-described case where no nitric acid is contained, the contact resistance before the corrosion test is less than 50 mΩ·cm² and 30 mΩ·cm² or more (□), and the contact resistance after the corrosion test is less than 50 mΩ·cm² and 30 mΩ·cm² or more (□).

On the other hand, when the concentration of nitric acid is within the range of 0.1 to 40 percent by mass, the contact resistance before the corrosion test is less than 30 mΩ·cm² and 20 mΩ·cm² or more (○), less than 20 mΩ·cm² and 15 mΩ·cm² or more (⊙), or less than 15 mΩ·cm² (⊙⊙), the contact resistance after the corrosion test is less than 30 mΩ·cm² and 20 mΩ·cm² or more (○), less than 20 mΩ·cm² and 15 mΩ·cm² or more (⊙), or less than 15 mΩ·cm² (⊙⊙) and, therefore, an excellent contact resistance property is exhibited.

When the concentration of nitric acid exceeds 40 percent by mass (No. 4-8), the concentration of the noble metal elements in the noble metal element concentrated layer satisfies the specified concentration of the present invention, but is lower than that in the above-described case. The contact resistance before the corrosion test is less than 50 mΩ·cm² and 30 mΩ·cm² or more (□)**,** and the contact resistance after the corrosion test is less than 50 mΩ·cm² and 30 mΩ·cm² or more (□).

When the concentration of hydrogen fluoride is less than 0.01 percent by mass (No. 4-9), although the concentration of the noble metal elements in the noble metal element concentrated layer satisfies the specified concentration of the present invention, the contact resistance before the corrosion test is less than 50 mΩ·cm² and 30 mΩ·cm² or more (□), and the contact resistance after the corrosion test is less than 50 mΩ·cm² and 30 mΩ·cm² or more (□).

On the other hand, when the concentration of hydrogen fluoride is within the range of 0.01 to 3.0 percent by mass, the contact resistance before the corrosion test is less than 30 mΩ·cm² and 20 mΩ·cm² or more (○), less than 20 mΩ·cm² and 15 mΩ·cm² or more (⊙), or less than 15 mΩ·cm² (⊙⊙), the contact resistance after the corrosion test is less than 30 mΩ·cm² and 20 mΩ·cm² or more (○), less than 20 mΩ·cm² and 15 mΩ·cm² or more (⊙), or less than 15 mΩ·cm² (⊙⊙) and, therefore, an excellent contact resistance property is exhibited.

When the concentration of hydrogen fluoride exceeds 3.0 percent by mass (No. 4-17), although the noble metal element concentrated layer satisfying the specified concentration of the present invention is formed, the thickness thereof becomes small, or a part thereof is peeled. Consequently, the contact resistance before the corrosion test is less than 50 mΩ·cm² and 30 mΩ·cm² or more (□), and the contact resistance after the corrosion test is less than 50 mΩ·cm² and 30 mΩ·cm² or more (□).

Table 5 shows the examination results on the effect exerted by the concentration of hydrochloric acid and the concentration of nitric acid when an aqueous solution containing hydrochloric acid and nitric acid was used as a solution in which a titanium alloy was immersed. As is clear from Table 5, when no nitric acid is contained, the concentration of the noble metal elements in the noble metal element concentrated layer satisfies a specified concentration of the present invention. However, the contact resistance before the corrosion test is less than 50 mΩ·cm² and 30 mΩ·cm² or more (□), and the contact resistance after the corrosion test is less than 50 mΩ·cm² and 30 mΩ·cm² or more (□). When the concentration of nitric acid is less than 0.1 percent by mass, although the concentration of the noble metal elements in the noble metal element concentrated layer is higher than that in the above-described case where no nitric acid is contained, the contact resistance before the corrosion test is less than 50 mΩ·cm² and 30 mΩ·cm² or more (□), and the contact resistance after the corrosion test is less than 50 mΩ·cm² and 30 mΩ·cm² or more (□).

On the other hand, when the concentration of nitric acid is within the range of 0.1 to 40 percent by mass, the contact resistance before the corrosion test is less than 30 mΩ·cm² and 20 mΩ·cm² or more (○), less than 20 mΩ·cm² and 15 mΩ·cm² or more (⊙), or less than 15 mΩ·cm² (⊙⊙), the contact resistance after the corrosion test is less than 30 mΩ·cm² and 20 mΩ·cm² or more (○), less than 20 mΩ·cm² and 15 mΩ·cm² or more (⊙), or less than 15 mΩ·cm² (⊙⊙) and, therefore, an excellent contact resistance property is exhibited.

When the concentration of nitric acid exceeds 40 percent by mass, the concentration of the noble metal elements in the noble metal element concentrated layer satisfies the specified concentration of the present invention, but is lower than that in the above-described case. The contact resistance before the corrosion test is less than 50 mΩ·cm² and 30 mΩ·cm² or more (□), and the contact resistance after the corrosion test is less than 50 mΩ·cm² and 30 mΩ·cm² or more (□).

When the concentration of hydrochloric acid is less than 1.0 percent by mass, although the concentration of the noble metal elements in the noble metal element concentrated layer satisfies the specified concentration of the present invention, the contact resistance before the corrosion test is less than 50 mΩ·cm² and 30 mΩ·cm² or more (□), and the contact resistance after the corrosion test is less than 50 mΩ·cm² and 30 mΩ·cm² or more (□).

On the other hand, when the concentration of hydrochloric acid is within the range of 1.0 to 30 percent by mass, the contact resistance before the corrosion test is less than 30 mΩ·cm² and 20 mΩ·cm² or more (○), less than 20 mΩ·cm² and 15 mΩ·cm² or more (⊙), or less than 15 mΩ·cm² (⊙⊙), the contact resistance after the corrosion test is less than 30 mΩ·cm² and 20 mΩ·cm² or more (○), less than 20 mΩ·cm² and 15 mΩ·cm² or more (⊙), or less than 15 mΩ·cm² (⊙⊙) and, therefore, an excellent contact resistance property is exhibited.

When the concentration of hydrochloric acid exceeds 30 percent by mass, although the noble metal element concentrated layer satisfying the specified concentration of the present invention is formed, the thickness thereof becomes small, or a part thereof is peeled. Consequently, the contact resistance before the corrosion test is less than 50 mΩ·cm² and 30 mΩ·cm² or more (□), and the contact resistance after the corrosion test is less than 50 mΩ·cm² and 30 mΩ·cm² or more (□).

As described above, in both the case where the aqueous solution containing hydrogen fluoride and nitric acid is used as the solution in which the titanium alloy is immersed and the case where the aqueous solution containing hydrochloric acid and nitric acid is used, when the concentration thereof are within the range of the above-described respective concentrations (the concentrations a and b), both the contact resistance before the corrosion test and the contact resistance after the corrosion test are low and, therefore, an excellent contact resistance property is exhibited. If the concentration is less than the concentration a or exceeds the concentration b, although both the contact resistance before the corrosion test and the contact resistance after the corrosion test are good, the contact resistances are higher than that in the case where the concentrations are within the above-described ranges (the concentrations a and b).

Tendencies similar to those described above are exhibited in the case where sulfuric acid, phosphoric acid, formic acid, or oxalic acid is used in place of the above-described hydrogen fluoride or hydrochloric acid. That is, when the concentration thereof are within the range of the above-described respective concentrations (the concentrations a and b), both the contact resistance before the corrosion test and the contact resistance after the corrosion test are low and, therefore, an excellent contact resistance property is exhibited. If the concentration is less than the concentration a or exceeds the concentration b, although both the contact resistance before the corrosion test and the contact resistance after the corrosion test are good, the contact resistances are higher than that in the case where the concentrations are within the above-described ranges (the concentrations a and b).

As is clear from Tables 4 and 5, when the concentration of the noble metal elements (total concentration) in the noble metal element concentrated layer is less than 40 atomic percent (No. 4-18 and No. 7-15), the contact resistance before the corrosion test is less than 100 mΩ·cm² and 50 mΩ·cm² or more (A), and the contact resistance after the corrosion test is 100 mΩ·cm² or more (x) or less than 100 mΩ·cm² and 50 mΩ·cm² or more (Δ).

On the other hand, when the concentration of the noble metal elements (total concentration) in the noble metal element concentrated layer is within the range of 40 to 100 atomic percent, the contact resistance before the corrosion test is less than 50 mΩ·cm² and 30 mΩ·cm² or more (□), less than 30 mΩ·cm² and 20 mΩ·cm² or more (○), less than 20 mΩ·cm² and 15 mΩ·cm² or more (⊙), or less than 15 mΩ·cm² (⊙⊙), the contact resistance after the corrosion test is less than 50 mΩ·cm² and 30 mΩ·cm² or more (□), less than 30 mΩ·cm² and 20 mΩ·cm² or more (○), less than 20 mΩ·cm² and 15 mΩ·cm² or more (⊙), or less than 15 mΩ·cm² (⊙⊙) and, therefore, an excellent contact resistance property is exhibited.

Table 6 shows the examination results on the effect exerted by the thickness of the oxide film formed between the noble metal element concentrated layer and the titanium alloy. The thickness of the oxide film was an average value of arbitrary 5 fields of view of a cross section photograph observed with a transmission electron microscope (TEM). The observation magnification in the measurement of the thickness of the oxide film was 150,000 times. Thicknesses of five portions of a film in a photograph of about 700 nm in the film thickness direction (vertical) by about 900 nm in a direction perpendicular to the film thickness (horizontal) were measured and were averaged, so as to determine the thickness of the oxide film. As is clear from Table 6, when the thickness of the oxide film formed between the noble metal element concentrated layer and the titanium alloy is within the range of 10 to 40 nm, the corrosion resistance is excellent and the durability is also excellent as compared with those in the case where the thickness is less than 10 nm and, therefore, the extent of increase in contact resistance due to the corrosion test is small. That is, even when the contact resistance is at the same level before the corrosion test, the contact resistance after the corrosion test in the case where the above-described thickness of the oxide film is 10 nm or more is lower than that in the case where the thickness is less than 10 nm and, therefore, is excellent. If the above-described thickness of the oxide film exceeds 40 nm, even when a noble metal element concentrated layer having an adequately high noble metal element concentration is formed, the contact resistance tends to become somewhat large at the time before the corrosion test, and this is not preferable. If the above-described thickness of the oxide film exceeds 60 nm, the contact resistance becomes significantly large at the time before the corrosion test and, therefore, is unsatisfactory.

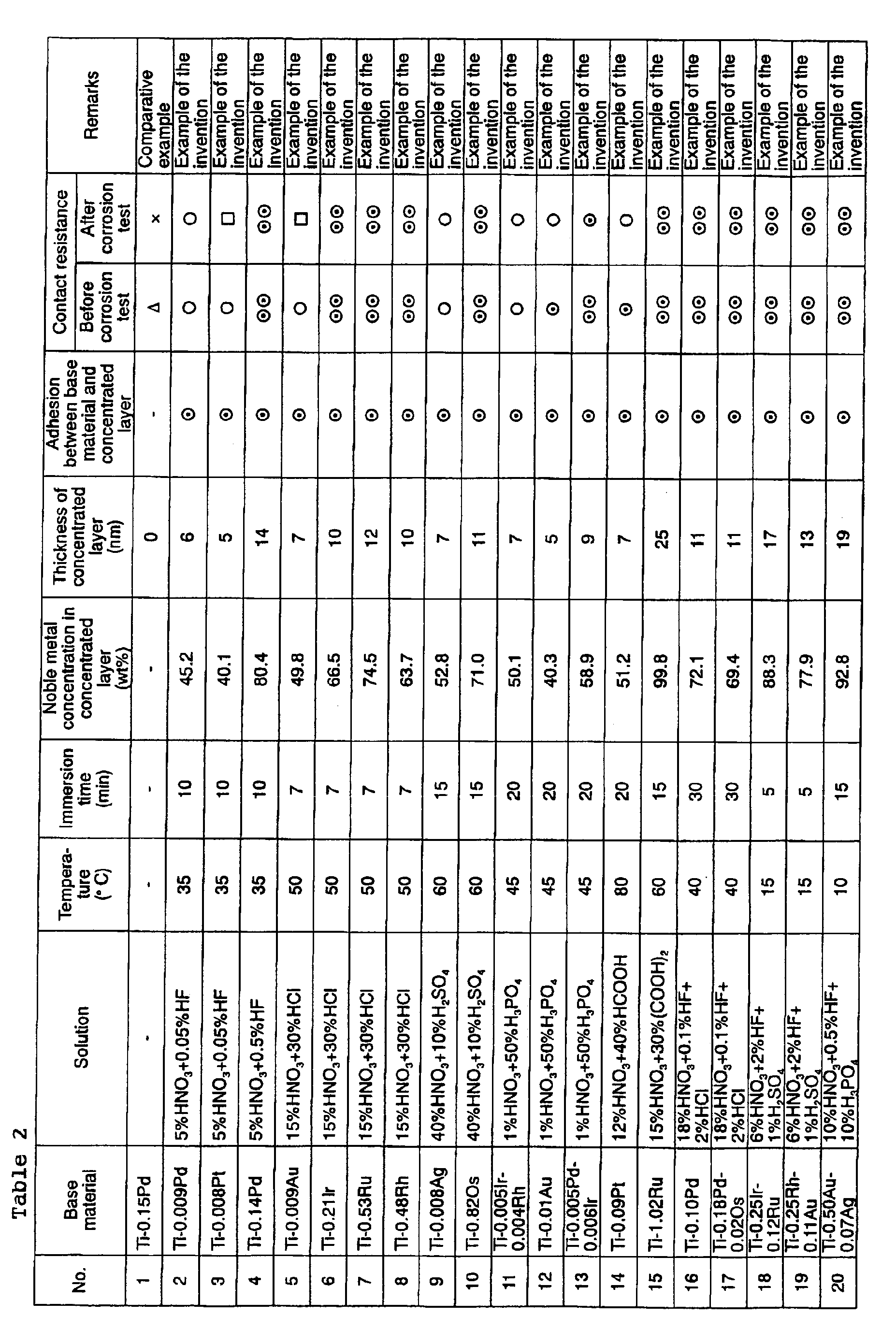

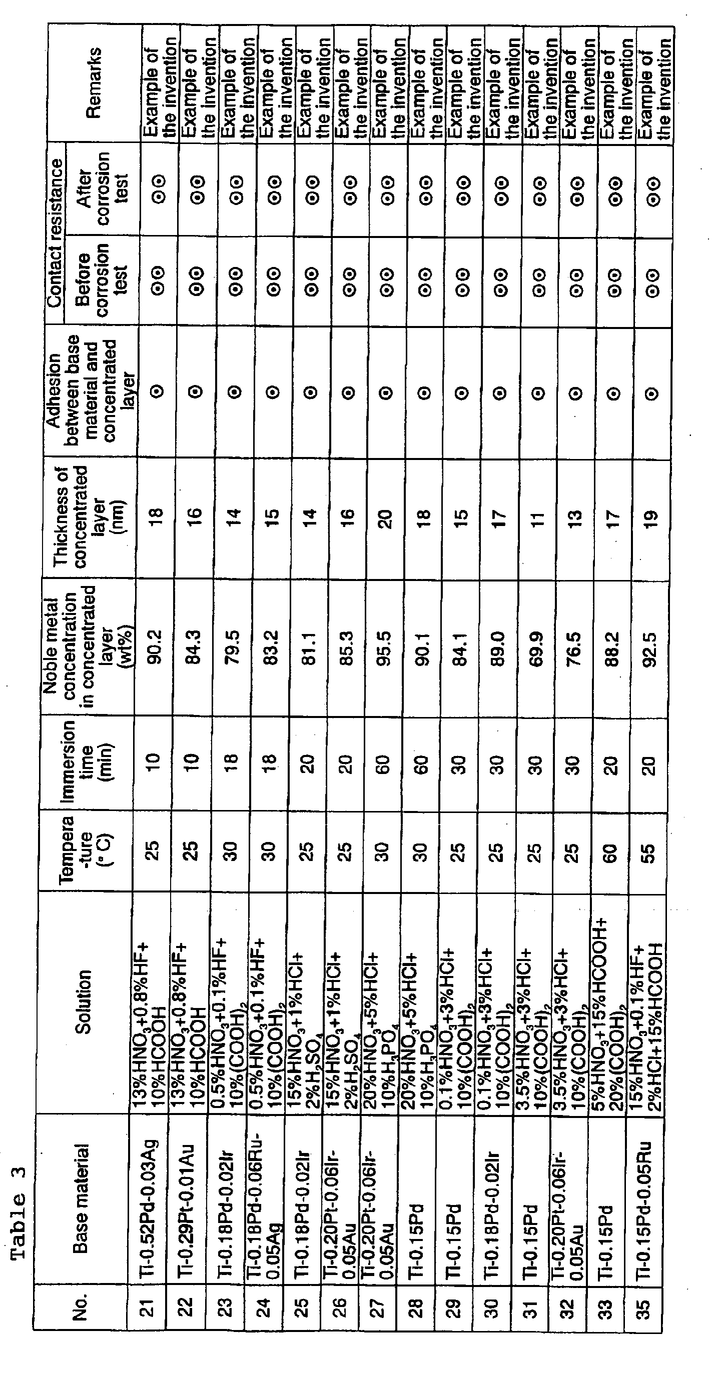

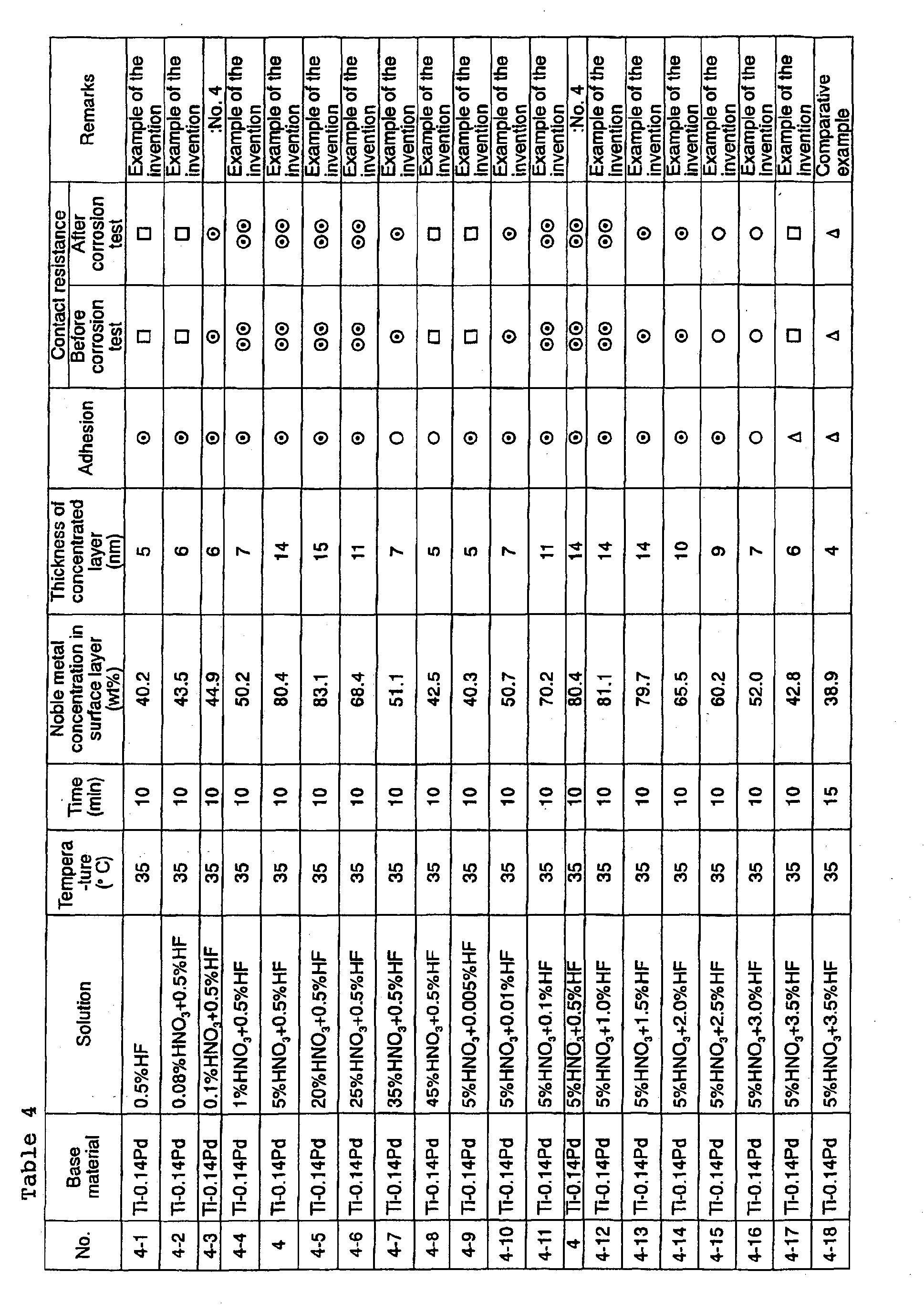

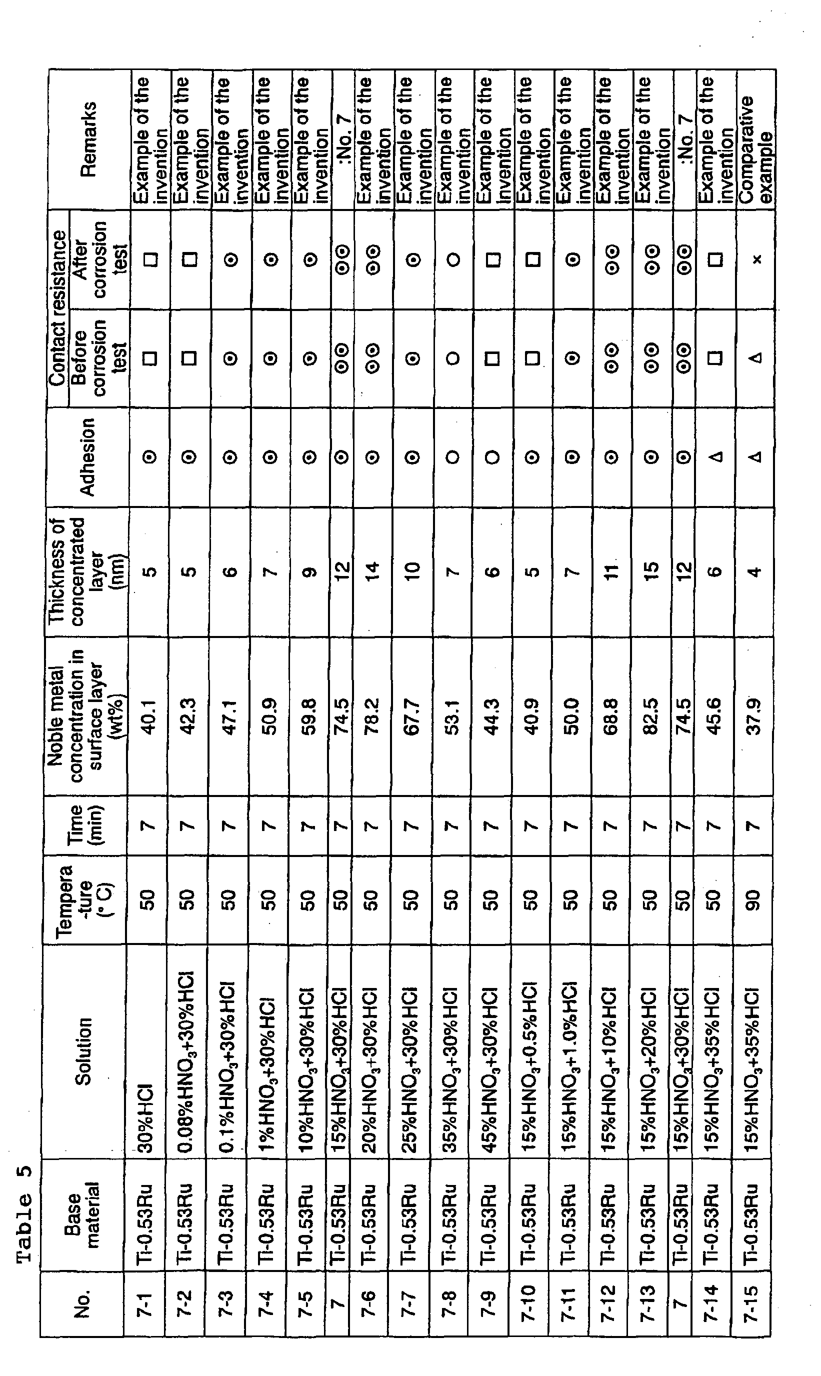

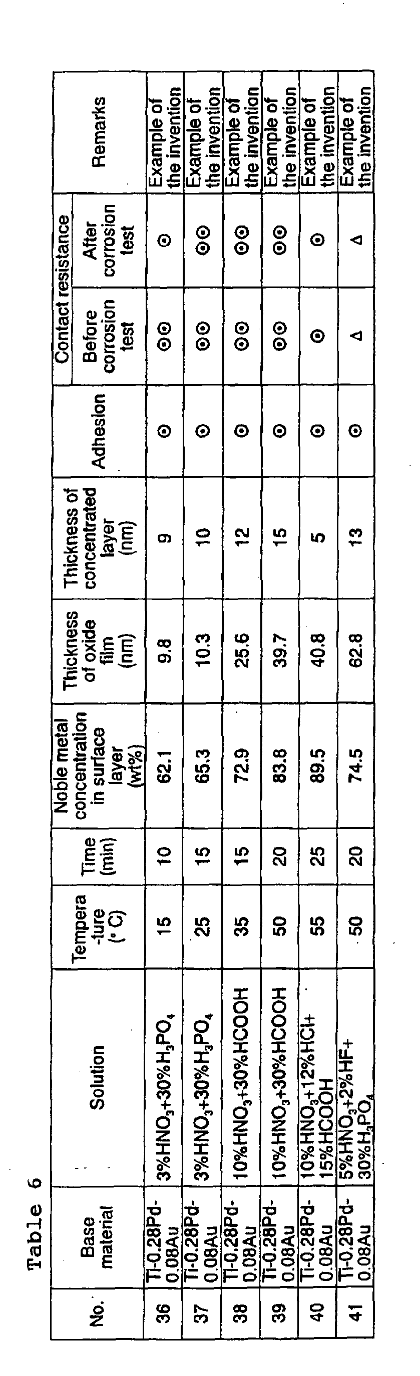

## Claims

1. A titanium material comprising:
a base material composed of a titanium alloy containing 0.01 to 1.0 percent by mass, in total, of at least one alloying element selected from the group consisting of gold, silver, and platinum group elements; and
a concentrated layer integrally disposed as a layer on the surface of the base material,
wherein the average thickness of the concentrated layer is 2.5 nm or more, and the total concentration of the alloying elements in the concentrated layer is 40 to 100 atomic percent.

2. The titanium material according to Claim 1, wherein the average thickness of the concentrated layer is 6.0 nm or more.

3. The titanium material according to Claim 1 or 2, wherein the total content of the alloying elements in the base material is 0.05 to 0.5 percent by mass.

4. The titanium material according to Claim 1, 2 or 3, further comprising an oxide film having a thickness of 10 to 40 nm between the concentrated layer and the base material.

5. The titanium material according to Claim 4, wherein the oxide film comprises titanium oxide having an anatase type crystal structure.

6. An electrode comprising the titanium material according to anyone of claims 1 to 5.

7. A separator of a fuel cell comprising the titanium material according to anyone of claims 1 to 5.

8. A method for manufacturing the titanium material according to anyone of claims 1 to 5, the method comprising the step of:
immersing a base material composed of a titanium alloy containing 0.01 to 1.0 percent by mass, in total, of at least one alloying element selected from the group consisting of gold, silver, and platinum group elements in a solution containing a non-oxidizing acid to elute titanium from the surface of the base material, so that the concentrated layer is formed on the surface of the base material.

9. The method for manufacturing the titanium material according to Claim 8, wherein the solution used for the immersion of the titanium alloy comprises an oxidizing acid in addition to the non-oxidizing acid.

10. The method for manufacturing the titanium material according to Claim 9, wherein the solution used for the immersion of the titanium alloy comprises 0.1 to 40 percent by mass of nitric acid as the oxidizing acid.

11. The method for manufacturing the titanium material according to Claim 8, wherein the solution used for the immersion of the titanium alloy comprises at least one selected from the group consisting of 0.01 to 3.0 percent by mass of hydrogen fluoride, 1.0 to 30 percent by mass of hydrochloric acid, 1.0 to 30 percent by mass of sulfuric acid, 10 to 50 percent by mass of phosphoric acid, 10 to 40 percent by mass of formic acid, and 10 to 30 percent by mass of oxalic acid as the non-oxidizing acid.

12. The method for manufacturing the titanium material according to anyone of claims 8 to 11, the method further comprising the step of heating at a temperature of 350° C to 600° C after the titanium alloy is immersed in the solution.

13. Use of the titanium material according to anyone of claims 1 to 5, as a raw material for titanium alloy prepared through dissolution without removing the concentrated layer.
